# EUROPÄISCHE PATENTSCHRIFT

(11) **EP 3 803 221 B1**
(45) Veröffentlichungstag und Bekanntmachung des Hinweises auf die Patenterteilung: **05.07.2023**
(21) Anmeldenummer: 19742459.1
(22) Anmeldetag: 23.05.2019
(51) Int. Cl.: F24F 5/00, F24D 3/14

(54) **DECKEN-TEMPERIERKÖRPER**
CEILING TEMPERATURE-CONTROL BODY
CORPS RÉGULATEUR DE TEMPÉRATURE DE PLAFOND

(30) Priorität: 24.05.2018 CH 6492018
(43) Veröffentlichungstag der Anmeldung: 14.04.2021
(73) Patentinhaber: Zehnder Group International AG, 5722 Gränichen (CH)
(72) Erfinder: WESCHLE, Hans-Peter, 77743 Neuried (DE)
(74) Vertreter: Rentsch Partner AG
(86) Internationale Anmeldenummer: PCT/IB2019/054282
(87) Internationale Veröffentlichungsnummer: WO 2019/224771

(56) Entgegenhaltungen:
- EP-A2- 0 971 177
- EP-A2- 1 278 019
- EP-A2- 2 006 608
- EP-A2- 2 182 295

## Beschreibung

Die Erfindung betrifft einen Decken-Temperierkörper, insbesondere einen Strahlkörper und/oder eine Deckenstrahlplatte, mit einem langgestreckten Tragkörper, der sich entlang einer Längsachse erstreckt und eine plattenartige Tragwand aufweist, von der parallel zur Längsachse verlaufende Seitenschenkel winkelig, insbesondere rechtwinkelig, abstehen und die eine Temperieranordnung mit mehreren Temperiersträngen trägt, wobei die Temperierstränge Fluidrohre zur Durchströmung mit einem Temperierfluid und/oder elektrische Temperierleitungen umfassen oder dadurch gebildet sind.

Aus EP0971177A2 ist eine Strahlheizflächenkonstruktion bekannt, welche mit einer Abhängung und Strahlplatten aus Stahl- oder Aluminiumblech, welche z.B. unter entsprechender Profilierung wenigstens einer Randaufkantung an wenigstens einem von im Abstand voneinander angeordneten Heizrohren eines Heizrohrregisters zur Wärmeübertragung auf- bzw. anliegen.

Aus EP2182295A2 ist ein Strahlflächenaufbau bekannt, welcher zum Temperieren eines Raumes mit mehreren von einem Wärmeübertragungsmedium zu durchströmenden Rohren eines Rohrregisters, denen mit den Rohren in wärmeleitendem Kontakt stehende Strahlbleche zugeordnet sind. Dabei ist auf der den Strahlblechen abgewandten Seite der Rohre wenigstens ein Kabelträger fixiert.

Aus EP2006608A2 ist eine Wand- oder Deckenverkleidung mit einem Kühl- und/oder Heizsystem bekannt, wobei die Wand- oder Deckenverkleidung mit wenigstens einem Halterungsprofil an der Wand oder Decke eines Bauwerkes befestigbar ist.

Aus EP1278019A2 ist ein Plattenelement zur Bildung einer Deckenstrahlplatte bekannt, wobei das Plattenelement aus einem dünnwandigen Material gefertigt ist, und Rohraufnahmestrukturen sowie Verstärkungsstrukturen aufweist. Um ein Plattenelement dahingehend weiterzuentwickeln, dass es bei gleichbleibender Materialstärke eine noch größere Festigkeit aufweist, wird mit der vorliegenden Erfindung vorgeschlagen, dass mindestens eine der Verstärkungsstrukturen als Verstärkungsrippe ausgebildet ist.

Die plattenartige Tragwand wird durch die Temperieranordnung, die beispielsweise mit Wasser durchflossene Fluidrohre umfasst, mechanisch stark belastet. Insbesondere verlaufen die Temperierstränge typischerweise parallel zur Längsachse, d.h. dass die Tragwand entsprechend massiv ausgestaltet sein muss, damit sie die Last nicht nur der Fluidrohre, sondern auch des darin strömenden Fluids,
z.B. Wassers, tragen kann. Die Tragwand neigt zu einer Durchbiegung nach unten, was in der Praxis zumindest unschön ist. Es können aber auch mechanische Verbindungen zwischen aneinandergereihten Decken-Temperierkörpern, beispielsweise quer oder längs zu deren Längsachse nebeneinander angeordneten Decken-Temperierkörper, durch die sich durchbiegende Tragwand unmöglich sein
oder zumindest deutlich erschwert sein.

Es ist daher die Aufgabe der vorliegenden Erfindung, einen verbesserten Temperierkörper bereitzustellen.

Gemäß der Erfindung ist diese Aufgabe durch einen Decken-Temperierkörper mit den Merkmalen des Anspruchs 1 gelöst. Bei diesem Decken-Temperierkörper ist insbesondere vorgesehen, dass der Tragkörper durch mindestens einen Querversteifungskörper versteift ist, dessen Längsenden an den Seitenschenkeln des Tragkörpers abgestützt sind und der sich mit einem Mittelabschnitt quer zur Längsachse des Decken-Temperierkörpers über die Tragwand erstreckt, wobei der Mittelabschnitt mit mindestens einem Verbindungsbereich mit der Tragwand verbunden ist.

Es ist dabei ein Grundgedanke, dass nicht die Tragwand als solche durch beispielsweise Verrippungen, massive Ausgestaltung oder dergleichen besonders stabil und tragfest ausgestaltet sein muss, sondern dass der Querversteifungskörper für den notwendigen Halt bzw. die Versteifung sorgt. Selbstverständlich ist es möglich, dass der Tragkörper durch mehrere Querversteifungskörper versteift ist, beispielsweise mehrere entlang der Längsachse angeordnete und sich quer zur derselben erstreckende Querversteifungskörper. Besonders bevorzugt ist es, wenn die Querversteifungskörper beispielsweise mit gleichen oder ähnlichen Abständen vorgesehen sind. Es ist aber auch möglich, dass Querversteifungskörper gerade im Bereich einer potenziell größten Durchbiegung des Tragkörpers vorgesehen sind, beispielsweise in einem Mittelabschnitt entfernt von den jeweiligen Stirnseiten oder Längsenden bezüglich der Längsachse des Tragkörpers.

Der Temperierkörper weist eine Temperieranordnung auf. Die Temperieranordnung dient zur Heizung und/oder Kühlung der Umgebung des Temperierkörpers. Die Temperieranordnung bildet vorteilhaft einen mit dem Temperierkörper fest verbundenen oder lösbar an dem Temperierkörper angeordneten Bestandteil des Temperierkörpers. Die Temperieranordnung umfasst beispielsweise Fluidkanäle oder Fluidrohre oder ist dadurch gebildet. Beispielsweise sind die Fluidkanäle oder Fluidrohre von einem Temperierfluid, insbesondere Wasser, durchströmt oder durchströmbar. Die Temperieranordnung kann aber auch beispielsweise eine elektrische Temperieranordnung sein oder umfassen. Beispielsweise kann die Temperieranordnung elektrische Heizleitungen und/oder Kühlleitungen, Heizflächenkörper und/oder Kühlflächenkörper umfassen oder dadurch gebildet sein.

Die Temperieranordnung, beispielsweise deren Temperierstränge, können fest oder lösbar an dem Tragkörper angeordnet sein. Besonders bevorzugt ist eine feste Anordnung der Temperieranordnung an dem Tragkörper, beispielsweise durch eine formschlüssige und/oder stoffschlüssige Verbindung.

Ein besonders bevorzugtes Ausführungsbeispiel sieht vor, dass die Temperierstränge sandwichartig zwischen der Tragwand und einer Haltewand oder Haltewandabschnitten, die mit der Tragwand neben dem Temperierstrang, insbesondere in Zwischenräumen zwischen den Temperiersträngen, verbunden ist, gehalten sind. Somit sind derartige Temperierstränge sozusagen eingemantelt. Bei der Tragwand und/oder der Haltewand handelt es sich beispielsweise um eine Blechwand.

Die Haltewand ist zweckmäßigerweise zumindest abschnittsweise konturgleich mit den Temperiersträngen, d.h. sie hält die Temperierstränge formschlüssig. Vorteilhaft entspricht eine Außenumfangskontur einer jeweiligen Haltewand im Bereich eines Temperierstrangs zumindest abschnittsweise geometrisch einem Außenumfang eines durch die Haltewand oder den Haltewandabschnitt gehaltenen Temperierstrangs und ist z.B. im Wesentlichen rund. Insbesondere in einem dem Querversteifungskörper zugewandten Abschnitt und/oder einem von der Tragwand am weitesten entfernten Abschnitt ist die Haltewand mit dem von ihr gehaltenen Temperierstrangs konturgleich.

Die Temperierstränge sind zweckmäßigerweise so orientiert, dass sie parallel zur Längsachse verlaufen. Bevorzugt ist es, wenn alle Temperierstränge parallel zu der Längsachse verlaufen. Die Temperierstränge können ganz oder Abschnittsweise parallel zur Längsachse verlaufen. Es ist z.B. möglich, dass ein Temperierstrang mäanderförmig ausgestaltet ist, d.h. dass er beispielsweise quer zur Längsachse verlaufende Temperierstrang-Abschnitte aufweist.

Der mindestens eine Verbindungsbereich ist zweckmäßigerweise in einem Zwischenraum zwischen zwei Temperiersträngen vorgesehen. Die Temperierstränge verlaufen beispielsweise parallel zur Längsachse, so dass zwischen ihnen ein Abstand quer zur Längsachse vorhanden ist. Dort ist vorteilhaft einer oder der Verbindungsbereich vorgesehen. Selbstverständlich sind bei mehreren Temperiersträngen vorzugsweise mehrere Verbindungsbereiche vorgesehen, die zwischen die Temperierstränge eingreifen oder zwischen den Temperiersträngen angeordnet sind.

Der Querversteifungskörper steht vorzugsweise in dem mindestens einem Verbindungsbereich an mindestens einem Temperierstrang vorbei zu der Tragwand vor und ist mit dieser oder einem mit der Tragwand fest verbundenen Körper durch ein Tragwand-Verbindungsmittel unmittelbar verbunden. Der fest verbundene Körper kann beispielsweise die Haltewand oder der Haltewand Abschnitt sein, mit der oder dem ein Temperierstrang mit der Tragwand verbunden ist oder an der Tragwand gehalten ist.

Das Tragwand-Verbindungsmittel kann beispielsweise eine Klemmkontur oder eine Formschlusskontur oder beides umfassen. So kann beispielsweise die Tragwand im Bereich der Tragwand-Verbindungsmittel eine zu dem Querversteifungskörper oder dessen Haltekontur passende Gegenkontur, zum Beispiel einen Haltevorsprung oder eine Halteaufnahme, aufweisen, mit der das Tragwand-Verbindungsmittel mit seiner Haltekontur in Eingriff ist. Beispielsweise kann eine Rippe oder dergleichen andere Gegenkontur an der Tragwand vorgesehen sein, mit der der Querversteifungskörper formschlüssig verbunden ist.

Besonders bevorzugt ist eine Stoffschluss-Verbindung, beispielsweise eine Klebeverbindung oder eine Schweißverbindung, zwischen dem Querversteifungskörper und der Tragwand oder einer an der Tragwand angeordneten Haltewand oder einem Temperierstrang. Eine stoffschlüssige Verbindung kann beispielsweise eine Klebeverbindung, eine Schweißverbindung oder dergleichen sein.

Eine Klebeverbindung zwischen dem Querversteifungskörper und dem Tragkörper oder einem an dem Tragkörper fest angeordneten Bauteil, zum Beispiel der Haltewand oder einem Temperierstrang, kann beispielsweise anhand einer Klebepaste oder einem sonstigen Klebstoff realisiert sein. Eine Klebeverbindung ist aber auch anhand eines Klebebands oder einer Klebefolie oder eines sonstigen Klebeschicht möglich. Das Klebeband, die Klebefolie oder Klebeschicht kann mit einer Schutzfolie versehen sein, die vor der Herstellung der Klebeverbindung von der Klebeschicht oder Klebefolie abgezogen wird.

Weiterhin vorteilhaft ist eine magnetische Verbindung. So können beispielsweise Magnete an dem Querverbindungskörper und/oder an der Tragwand vorgesehen sein, die eine leichte Verbindung zwischen dem Querverbindungskörper und der Tragwand ermöglichen. Insbesondere vorteilhaft ist es, wenn die Tragwand und/oder der Querverbindungskörper ferromagnetisch ist, d.h. dass ein Magnet an der einen Komponente von Tragwand oder Querverbindungskörper mit der anderen Komponente von Querversteifungskörper und Tragkörper eine magnetisch haltende Verbindung eingehen kann. Dabei ist es möglich, dass der Magnet Beispielweise an einer Fläche des Querversteifungskörper oder des Tragkörpers anhaftet. Für den Magneten ist eine Magnethalterung nicht unbedingt erforderlich.

Ein bevorzugtes Ausführungsbeispiel sieht vor, dass der Querversteifungskörper oder die Tragwand oder beide eine Magnethalterung zum Halten mindestens eines Magneten aufweist. Die Magnethalterung hält den Magneten formschlüssig. Bevorzugt ist es, wenn der mindestens eine Magnet in oder an der Magnethalterung bezüglich mindestens eines Bewegungsfreiheitsgrades, insbesondere eines linearen Bewegungsfreiheitsgrades, beweglich aufgenommen ist. Beispielsweise umfasst die Magnethalterung eine Schiebeaufnahme zum Verschieben des Magneten. Es ist aber auch möglich, dass der Magnet in der Magnethalterung mit einem Bewegungsspiel um eine Rotationsachse oder Schwenkachse aufgenommen ist. Die Beweglichkeit des Magneten in oder an der Magnethalterung ermöglicht beispielsweise eine Positionierung des Magneten bezüglich der jeweils anderen zu haltenden Komponente von Querversteifungskörper oder Tragwand.

Es ist möglich, dass der Querversteifungskörper unmittelbar mit der Tragwand verbunden sein kann oder mit einem an der Tragwand fest angeordneten Körper, beispielsweise der bereits erwähnten Haltewand oder dem Haltewandabschnitt. Zwischen der Haltewand oder dem Haltewand Abschnitt und der Tragwand ist mindestens ein Temperierstrang, insbesondere die Temperierstrang Ordnung als Ganzes gehalten, insbesondere sandwichartig.

Gemäß der Erfindung weist der Querversteifungskörper Temperierstrang-Haltemittel zum Halten an mindestens einem Temperierstrang auf. Beispielsweise ist es möglich, dass der Temperierstrang ortsfest bezüglich der Tragwand angeordnet ist, beispielsweise mit dieser verklebt, an dieser formschlüssig gehalten oder dergleichen. Somit ist also der Temperierstrang bezüglich der Tragwand ortsfest. Der Querversteifungskörper ist seinerseits mit dem Temperierstrang fest verbunden, so dass der Querversteifungskörper sozusagen unter Zuhilfenahme oder anhand des Temperierstrangs die Tragwand hält oder trägt.

Die Temperierstrang-Haltemittel, mit denen der Querversteifungskörper mit dem mindestens einen Temperierstrang verbunden ist, können beispielsweise eine Klemmhalterung oder eine Formschlusshalterung oder beides umfassen. Es ist aber auch möglich, dass die Temperierstrang-Haltemittel einen oder mehrere Magneten umfassen, mit dem oder denen der Querversteifungskörper mit dem Temperierstrang magnetisch verbunden ist.

Schließlich ist auch eine Stoffschlussverbindung möglich, beispielsweise eine Klebeverbindung oder Schweißverbindung, um den Querversteifungskörper mit dem Temperierstrang zu verbinden.

Selbstverständlich sind Kombinationen möglich, d.h. dass beispielsweise bei einer Formschlusshalterung oder Klemmhalterung eine zusätzliche magnetische oder stoffschlüssige Verbindung zwischen dem Querversteifungskörper und dem Temperierstrang vorgesehen ist.

Die Temperieranordnung, insbesondere die Temperierstränge, sind sozusagen sandwichartig zwischen dem oder den Querversteifungskörpern und der Tragwand angeordnet. Dabei ist es möglich, dass beispielsweise Vorsprünge des Querversteifungskörpers in Richtung der Tragwand an den Temperiersträngen vorbei vorstehen.

Bevorzugt ist es, wenn der Querversteifungskörper eine oder mehrere Aussparungen für einen Temperierstrang aufweist. Wenn mehrere Aussparungen vorhanden sind, beispielsweise eine Reihenanordnung von Aussparungen, ist beispielsweise eine Art Rechen oder Kamm gebildet, d.h. dass in jeder Aussparung jeweils ein Temperierstrang oder mehrere Temperierstränge aufgenommen sein können.

Zwischen den Temperiersträngen und dem Querversteifungskörper kann in einer jeweiligen Aussparung ein Freiraum oder Spiel vorhanden sein. Mithin ist es also möglich, jedoch nicht notwendig, dass der Temperierstrang im Bereich einer jeweiligen Aussparung in Berührkontakt oder formschlüssigem Kontakt oder Stoffschluss-Verbindung mit dem Querversteifungskörper ist. Das ist aber ohne weiteres möglich. Ein Freiraum oder Spiel zwischen Querversteifungskörper und Temperierstrang ermöglicht beispielsweise eine Ausrichtung des Querversteifungskörper liegt bezüglich des Temperierstrangs.

Die Aussparung kann aber auch als eine Halteaufnahme ausgestaltet sein.

Bevorzugt ist es, wenn der Querversteifungskörper mindestens eine Halteaufnahme zum Halten an einem Temperierstrang aufweist. Die Halteaufnahme weist beispielweise eine Formschlusskontur auf, in der der jeweilige Temperierstrang formschlüssig aufgenommen ist. Die Halteaufnahme kann beispielsweise eine Klemmaufnahme zum Verklemmen des Temperierstrangs, eine Rastaufnahme zum Verrasten des Temperierstrangs oder dergleichen bilden oder als eine solche ausgestaltet sein. Beispielsweise ist die Halteaufnahme zwischen Halteschenkeln eines Haltekörpers vorgesehen, die in einem Sinne eines Vergrößerns der Halteaufnahme voneinander weg beweglich, insbesondere federnd, sind, so dass der Temperierstrang sozusagen in die Halteaufnahme eingerastet werden kann oder beispielsweise der nachfolgend noch erläuterte Haltekörper sozusagen auf den Temperierstrang aufgerastet werden kann.

Die erläuterte Halteaufnahme kann integral am Querversteifungskörper vorgesehen sein. Beispielsweise können an diesem durch eine schneidende oder fräsende Bearbeitung, durch Guss, insbesondere Spritzgießen oder dergleichen, entsprechende Aufnahmekonturen bzw. Halteaufnahmen ausgebildet sein. Auch ein Laserschneiden oder dergleichen ist ohne weiteres möglich, um eine oder mehrere Halteaufnahmen oder Aussparungen herzustellen.

Bevorzugt ist ein Konzept, bei dem die Halteaufnahme an einem Haltekörper, beispielsweise einer Halteklemme, vorgesehen ist. Der Haltekörper kann an dem Querversteifungskörper ortsfest angeordnet sein. Der Haltekörper kann auch einen integralen Bestandteil des Querversteifungskörpers bilden. Bevorzugt ist es, wenn der Haltekörper zumindest quer zu der Längsachse des Decken-Temperierkörpers verschieblich ist. Somit kann beispielsweise die Position des Haltekörpers relativ zu dem zu haltenden Temperierstrang angepasst werden, insbesondere zum Ausgleich von Fertigungstoleranzen.

Der Haltekörper kann unlösbar, jedoch beweglich am Querversteifungskörper angeordnet sein.

Weiterhin ist es möglich, dass der Haltekörper durch eine Rastverbindung an dem Querträger fixiert ist. Die Rastverbindung wird beispielsweise durch mindestens eine Rastnase, insbesondere eine Paarung zweier Rastnasen, realisiert. Die Rastnasen können beispielsweise am Haltekörper vorhanden sein, und in eine Rastaufnahme am Querversteifungskörper eingreifen. Die Rastnasen können beispielsweise voneinander weg federnd sein, so dass sie in eine Art Klemmsitz gelangen, wenn sie in die Rastaufnahme eingreifen. Die Rastaufnahme kann eine Längsgestalt aufweisen, beispielsweise eine Längsgestalt quer zur Längsachse, so dass der mit der Rastaufnahme verrastete Haltekörper in der Rastaufnahme verschieblich aufgenommen ist.

An dem Tragkörper sind vorzugsweise mehrere, insbesondere mindestens zwei Querversteifungskörper angeordnet. In Bezug auf die Längsachse des Tragkörpers haben die Querversteifungskörper einen Abstand oder können auch unmittelbar nebeneinander angeordnet sein. Es können auch beispielsweise Paarungen oder Gruppierungen von mehreren Querversteifungskörpern, beispielsweise zwei Querversteifungskörpern, vorgesehen sein, die einen Abstand in Bezug auf die Längsachse des Tragkörpers zu einer benachbarten Paarung oder Gruppierung von Querversteifungskörpern aufweist.

Der Decken-Temperierkörper weist zweckmäßigerweise ein mit mindestens einem Längsende bezüglich der Längsachse eine quer zu der Längsachse verlaufende und von der Tragwand abstehende Querseitenwand auf. Die Querseitenwand ist vorzugsweise mit mindestens einem Seitenschenkel des Tragkörpers verbunden oder einstückig. Beispielsweise kann die Querseitenwand ebenso wie ein Seitenschenkel des Tragkörpers durch eine Blech-Bearbeitung, eine Umkantung oder dergleichen hergestellt sein. Bevorzugt ist es, wenn die Querseitenwand zur gleichen Seite vorsteht wie die Seitenschenkel. Es ist aber auch möglich, dass die Querseitenwand und die Seitenschenkel von der Tragwand entgegengesetzt abstehen, d.h. die Seitenschenkel in Gebrauchslage oder Einbaulage des Decken-Temperierkörpers nach oben, die Querseitenwand nach unten.

Die Seitenschenkel und die Querseitenwand bilden vorzugsweise eine wannenartige Gestalt.

Bevorzugt ist es, wenn an beiden Längsenden bezüglich der Längsachse des Tragkörpers an dem Tragkörper jeweils eine Querseitenwand vorgesehen ist.

Eine jeweilige Querseitenwand erstreckt sich vorzugsweise bis zu den Seitenschenkeln des Tragkörpers, hat also eine Länge, die der Querbreite des Tragkörpers quer zur Längsachse entspricht.

Der Tragkörper kann beispielsweise eine Aufnahmekassette für die Temperieranordnung bilden oder als Aufnahmekassette ausgestaltet sein.

Der Tragkörper und/oder der mindestens eine Querversteifungskörper bestehen zweckmäßigerweise aus Metall, beispielsweise aus Metallblech.

An dieser Stelle sei erwähnt, dass es möglich ist, dass der Tragkörper aus einem thermisch leitfähigeren Material besteht als der Querversteifungskörper. Dieser kann beispielsweise aus Kunststoff bestehen, während der Tragkörper aus einem Polymermaterial oder einem Metallmaterial besteht, welches optimale thermische Leitfähigkeit aufweist.

Der Querversteifungskörper oder der Tragkörper oder beide können Profilkörper sein oder einen Profilkörper aufweisen.

Der Querversteifungskörper weist vorzugsweise eine in Einbaulage des Decken-Temperierkörpers hochstehende, plattenartige Stützwand auf.

Der mindestens eine Querversteifungskörper weist vorzugsweise mindestens eine plattenartige Stützwand auf, deren Flachseite zu einer dem Querversteifungskörper zugewandten Oberseite oder Flachseite winkelig, beispielsweise rechtwinkelig, verläuft. Die Stützwand kann aber auch schräg, beispielsweise 45 Grad schräg oder dergleichen, zu der Oberseite oder Flachseite der Tragwand orientiert sein. Die hochstehende bezüglich der Stützwand winkelig abstehende oder winkelig verlaufende Stützwand ist statisch besonders stark belastbar.

Es ist möglich, dass die Tragwand unversteift ist, d.h. dass sie beispielsweise keine Versteifungsrippen aufweist. Beispielsweise weist die Tragwand außer den Seitenschenkeln und ggf. einer vorderen oder hinteren Querseitenwand keine Versteifungsstruktur, beispielsweise keine Versteifungsrippen, auf.

Es ist aber auch möglich, dass die Tragwand mindestens eine, insbesondere parallel zur Längsachse verlaufende, Versteifungsrippe aufweist. Eine derartige Versteifungsrippe ist zweckmäßigerweise in einem Abstand zwischen zwei parallel zur Längsachse angeordneten oder verlaufenden Temperiersträngen angeordnet. Die Versteifungsrippe eignet sich, wie bereits erwähnt, vorzugsweise zur Verbindung zwischen der Tragwand und dem Querversteifungskörper. Bevorzugt weist die Tragwand eine Anordnung mehrerer parallel zur Längsachse verlaufender Versteifungsrippen auf.

Der Querversteifungskörper weist zweckmäßigerweise eine Magnethalterung für mindestens einen Magneten auf, mit dem der Querversteifungskörper mit dem Tragkörper, insbesondere der Tragwand, verbindbar ist. Die Magnethalterung umfasst beispielsweise eine Schwalbenschwanz-Halterung.

Der Querversteifungskörper hat beispielsweise eine U-förmige, L-förmige oder T-förmige Querschnittskontur.

Es ist möglich, dass beispielsweise von der bereits erwähnten Stützwand ein Halteschenkel absteht oder an der Stützwand ein Halteschenkel angeordnet ist, der zur Verbindung oder Abstützung an einem jeweiligen Seitenschenkel des Tragkörpers dient. Der Halteschenkel und die Stützwand bilden beispielsweise eine L- oder T-förmige Konfiguration.

Von der Stützwand steht beispielsweise ein Verbindungsschenkel ab, beispielsweise L-förmig.

An den Längsenden kann der mindestens eine Querversteifungskörper mit dem Tragkörper fest verbunden sein, beispielsweise verschweißt, formschlüssig verbunden oder dergleichen.

Es ist auch möglich, dass der Tragkörper den Querversteifungskörper an seinen Längsenden in Bezug auf mindestens einen, vorzugsweise zwei oder drei voneinander verschiedene Bewegungsfreiheitsgrade oder Bewegungsrichtungen abstützt, jedoch nicht stoffschlüssig mit dem Querversteifungskörper verbunden ist.

So können beispielsweise die Längsenden des Querversteifungskörpers Stützabschnitte aufweisen oder als Stützabschnitte ausgestaltet sein, die sich an den Seitenschenkeln des Temperierkörpers abstützen. Bei den obigen Ausführungsbeispielen wurden mehrere Möglichkeiten aufgezeigt, den Querversteifungskörper beispielsweise magnetisch, anhand einer Rastverbindung oder dergleichen mit dem Tragkörper direkt oder den mit dem Tragkörper fest verbundenen Temperierleitungen zu verbinden. Eine sozusagen lose oder jedenfalls nicht stoffschlüssige Abstützung des Querversteifungskörpers am Tragkörper findet dann dadurch Halt, dass der Querversteifungskörper mit der Tragwand verbunden wird. Somit wird beispielsweise Montage des Querversteifungskörper liegt am Tragkörper, der bereits die Temperieranordnung trägt, möglich. So kann beispielsweise ein Decken-Temperierkörper bedarfsgerecht mit einem oder mehreren Querversteifungskörpern ausgestaltet sein. Gerade bei dieser Konfiguration ist es vorteilhaft, wenn der Querversteifungskörper mit seinen Längsenden nur an den Seitenschenkeln des Tragkörpers abgestützt ist, jedoch nicht fest mit diesem verbunden.

Bevorzugt ist es, wenn die Längsenden des Querversteifungskörper an dem Tragkörper, insbesondere dessen Seitenschenkel, formschlüssig abgestützt sind. Beispielsweise sind an den Seitenschenkeln des Tragkörpers Formschlussaufnahmen ausgebildet, in die Längsenden des Verstärkungskörpers formschlüssig eingreifen. Derartige Formschlussaufnahmen können beispielsweise durch die nachfolgend erläuterten Tragschenkel definiert sein.

Weiterhin ist es vorteilhaft, wenn an einem Längsende oder beiden Längsende des Querversteifungskörper mindestens eine Stützfläche, beispielsweise an einem Stützvorsprung des Querversteifungskörper, vorgesehen ist, die zur Abstützung an dem Tragkörper mit mindestens einer Kraftkomponente ausgestaltet ist, die zu der Tragwand orientiert ist. Bevorzugt weist der Querversteifungskörper an mindestens einem Längsende eine Stützfläche auf, die parallel oder etwa parallel zu der dem der Verstärkungskörper zugewandten Oberfläche der Tragwand ist.

Der Querversteifungskörper ist vorzugsweise quer zur Längsachse des Tragkörpers an seinen Längsenden am Tragkörper, insbesondere an den Seitenschenkeln des Tragkörpers, unverschieblich abgestützt.

An den Seitenschenkeln des Tragkörpers sind zweckmäßigerweise Tragschenkel vorgesehen, die beispielsweise in Richtung der Tragwand oder in Richtung von der Tragwand weg von den Seitenschenkeln abstehen. Die Tragschenkel verlaufen zweckmäßigerweise parallel zur Tragwand. An den Tragschenkeln kann sich der Querversteifungskörper mit seinen Längsenden abstützen.

Nachfolgend werden Ausführungsbeispiele der Erfindung anhand der Zeichnung erläutert. Es zeigen:
- Figur 1: eine Frontalansicht eines Decken-Temperierkörpers in unversteiftem Zustand,
- Figur 2: den Decken-Temperierkörper gemäß Figur 1 bei einer Montage eines Querversteifungskörpers, der in
- Figur 3: montiert ist,
- Figur 4: einen weiteren Decken-Temperierkörper mit einem Querversteifungskörper, der magnetisch mit einem Tragkörper verbunden ist,
- Figur 5: eine perspektivische Schrägansicht eines Querversteifungskörpers sowie eines Temperierstrangs, eines Decken-Temperierkörpers, der in
- Figur 6: Seitenansicht dargestellt ist,
- Figur 7: einen weiteren Decken-Temperierkörper mit einem Querversteifungskörper, der mit einem Temperierstrang verrastet ist,
- Figur 8: eine perspektivische Schrägansicht eines Haltekörpers des Querversteifungskörpers gemäß Figur 7,
- Figur 9: eine Draufsicht auf einen Teil des Querversteifungskörpers gemäß Figur 7 mit dem Haltekörper gemäß Figur 8,
- Figur 10: eine Frontalansicht auf den Decken-Temperierkörper gemäß Figur 7,
- Figur 11: eine Frontalansicht des teilweise mit einem Temperierstrang verrasteten Haltekörpers des Decken-Temperierkörpers gemäß Figur 7, der in
- Figur 12: mit dem Temperierstrang verrasteten Zustand dargestellt ist,
- Figur 13: eine perspektivische Schrägansicht von oben auf einen Decken-Temperierkörper in der Art einer Kassette, und
- Figur 14: eine perspektivische Schrägansicht als Querversteifungskörpers des Decken-Temperierkörpers gemäß Figur 13.

In der Zeichnung sind verschiedene Decken-Temperierkörper dargestellt, bei denen gleiche oder ähnliche Komponenten mit den gleichen Bezugsziffern versehen sind. Zur Unterscheidung einzelner Komponenten der verschiedenen Ausführungsbeispiele sind teilweise Großbuchstaben A - D verwendet.

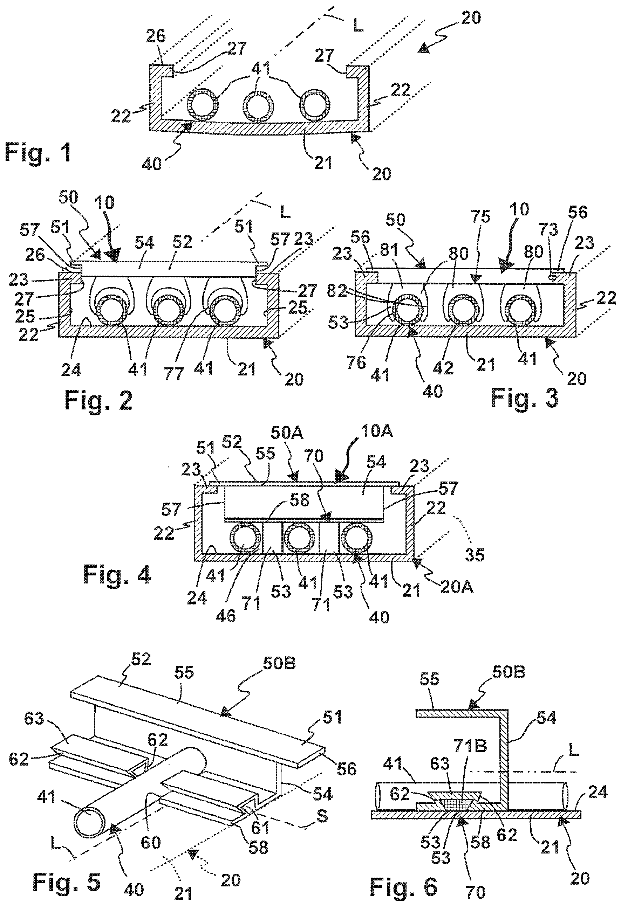

Von einem in den Figuren 2 und 3 mit einem Querversteifungskörper 50 versehenen Decken-Temperierkörper 10 sind in Figur 1 lediglich dessen Tragkörper 20 sowie dessen Temperieranordnung 40 dargestellt.

Der Tragkörper 20 weist eine Tragwand 21 auf, die in Gebrauchslage typischerweise etwa horizontal verläuft. Der Tragkörper 20 ist zur Montage an einer Decke eines Raumes vorgesehen, wo er die Temperieranordnung 40 trägt. Die Temperieranordnung 40 kann durch eine Tragwand 21 des Tragkörpers 20 hindurch Wärme oder Kälte in einen Raum R, zum Beispiel einen Wohnraum, einen Büroraum, eine Industriehalle oder dergleichen, abgeben oder abstrahlen.

Die Tragwand 21 bildet einen Bestandteil eines Profilkörpers 35, der noch Seitenschenkel 22 seitlich neben der Tragwand 21 aufweist. Zwischen den Seitenschenkeln 22 erstreckt sich eine Bodenfläche 24, auf der die Temperieranordnung 40 angeordnet ist.

Die Temperieranordnung 40 umfasst beispielsweise einen oder mehrere Temperierstränge 41, insbesondere Fluidrohre 42, die von einem Fluid, beispielsweise Wasser, durchströmbar sind.

Die Seitenschenkel 22 bewirken eine gewisse Stabilisierung des Tragkörpers 20, die noch zudem dadurch verstärkt wird, dass von den Seitenschenkeln 22 Tragschenkel 23 einander zugewandt abstehen, d.h. in Richtung der Bodenfläche 24. Die Tragschenkel 24 verlaufen parallel zur Bodenfläche 24, so dass insgesamt die Tragwand 21 durch die Seitenschenkel 22 und die Tragschenkel 23 versteift ist. Dennoch biegt sich die Tragwand 21 bei Belastung durch die Temperieranordnung 40 durch, insbesondere dann, wenn die Temperierstränge 41 oder Fluidrohre 42 mit dem Temperierfluid, insbesondere Wasser, durchflossen sind. Das ist in Figur 1 schematisch angedeutet.

Die nachfolgenden Maßnahmen schaffen hier Abhilfe:
Der Decken-Temperierkörper 10 ist nämlich durch eine oder mehrere Querversteifungskörper 50 versteift. Der Querversteifungskörper 50 weist einen Mittelabschnitt 52 auf, der sich zwischen Längsenden 51 erstreckt und der Bodenfläche 24 der Tragwand 21 gegenüberliegt. Mithin erstreckt sich also eine Unterseite des Querversteifungskörpers 50 der Bodenfläche 24 gegenüberliegend.

Die Längsenden 51 des Querversteifungskörpers 50 stützen sich an den Tragschenkeln 23 ab, beispielsweise an den einander zugewandten Innenseiten 25 der Tragschenkel 23, so dass quer zu einer Längsachse L, entlang derer sich der Tragkörper 20 erstreckt, eine Querabstützung des Querversteifungskörpers 50 am Tragkörper 20 gegeben ist.

Der Querversteifungskörper 50 weist eine Stützwand 54 auf, deren Stirnseiten 57 sich an den Innenseiten 27 der Tragschenkel 23 abstützen.

Vor die Stützwand 54 stehen im Bereich der Längsenden 51 oder zu deren Bildung Stützvorsprünge 56 vor, die auf Oberseiten 26 oder Tragflächen 26 der Tragschenkel 23 aufliegen. Somit stützt sich also der Querversteifungskörper 50 an den Seitenschenkeln 22, insbesondere deren Tragschenkeln 23, ab.

Im Bereich mindestens eines Längsendes 51 oder beiden Längsenden 51 kann eine stoffschlüssige Verbindung 73 zwischen dem Querversteifungskörper 50 und dem Tragkörper 20 vorgesehen sein, beispielsweise eine Verschweißung oder Verklebung.

Allein durch die stoffschlüssige Verbindung 73 und/oder durch das formschlüssige Abstützen gemäß der obigen Erläuterung ist eine gewisse Verstärkung des Tragkörpers 20 bewirkt.

Als zusätzliche Versteifungsmaßnahme ist der Querversteifungskörper 50 jedoch mit der Temperieranordnung 40, nämlich deren Fluidrohre 42 verbunden, die ihrerseits wiederum mit dem Tragkörper 20 fest verbunden sind, beispielsweise mit diesem verklebt oder verschweißt, was in der Zeichnung nicht unmittelbar sichtbar ist. Beispielsweise sind die auf der Bodenfläche 24 aufliegenden Bereiche der Temperierstränge 41 mit dieser Bodenfläche 24 verklebt oder verschweißt.

Der Querversteifungskörper 50 ist mit der Temperieranordnung 40 verrastet, was in den Figuren 2 und 3 deutlicher wird. An dem Querversteifungskörper 50 sind Haltekörper 80 angeordnet, beispielswiese eine Art von Halteklammern, die die Temperierstrang-Haltemittel 75 bilden. Jeder Haltekörper 80 hat eine Haltekörper-Basis 80, von der Halteschenkel oder Klemmschenkel 82 abstehen. Die Klemmschenkel oder Halteschenkel 82 bilden eine Halteaufnahme oder Rast-Klemmaufnahme 77, mit denen die Fluidrohre 42 oder Temperierstränge 41 verrastbar sind. Beispielsweise sind die Fluidrohre 42 am Außenumfang kreisrund, dementsprechend sind die Halteaufnahmen 77 im Innenumfang ebenfalls kreisrund, jedoch über ein Teilsegment des Kreises geöffnet, so dass die Haltekörper 80 von einer der Bodenfläche 24 gegenüberliegenden Seite her mit den Temperiersträngen 41 verrastbar sind.

Die Haltekörper 80 sind fest mit dem Querversteifungskörper 50, insbesondere der Stützwand 54 verbunden, beispielsweise verklebt, verschweißt oder einstückig mit demselben. An jedem Temperierstrang 41 ist somit durch die Verrastung des Querversteifungskörpers 50 ein Verbindungsbereich 53 mit der Tragwand 21 geschaffen, an der die Temperierstränge 41 fest angeordnet sind.

An dieser Stelle sei erwähnt, dass die Temperierstränge 41 beispielsweise auch dadurch gebildet sein können, dass die Tragwand 21 in nicht dargestellter Weise Längskanäle aufweist, die parallel zur Längsachse L verlaufen. In diesem Fall bilden die Temperierstränge dann einen integralen Bestandteil der Tragwand.

Ein magnetisches Halteprinzip ist anhand eines Decken-Temperierkörpers 10A schematisch dargestellt. Ein Tragkörper 20A entspricht im Wesentlichen dem Tragkörper 20, hat also eine Tragwand 21, von der Seitenschenkel 22 abstehen, an denen wiederum Tragschenkel 23 einander zugewandt winkelig angeordnet sind. Ein Durchbiegen der Tragwand 21 bei Belastung durch die Temperierstränge 41 wird durch einen Querversteifungskörper 50A verhindert oder vermindert, der am Tragkörper 20A abgestützt ist.

Der Querversteifungskörper 50A weist eine Stützwand 54 auf, deren Flachseite winkelig, vorliegend rechtwinkelig, zur Bodenfläche 24 verläuft. Die Stützwand 24 ist zwischen den Tragschenkeln 23 angeordnet, stützt sich jedoch quer zur Längsachse L nicht an denselben ab. Mithin ist also der Querversteifungskörper 50A zwischen den Seitenschenkeln 22 quer zur Längsachse L verschieblich, was eine leichtere Ausrichtung bezüglich des Tragkörpers 20 ermöglicht. Dennoch ist eine Abstützung parallel zur Bodenfläche 24 gegeben, weil sich die Längsenden 51 des Querversteifungskörpers 50 an den Tragschenkeln 23 abstützen können. Die Abstützung ist durch Längsendbereiche eines Halteschenkels 55 gegeben, der zu der Stützwand 54 winkelig ist, ähnlich wie in Figur 5 dargestellt. Die vor die Stützwand 54 quer zur Längsachse L vorstehenden Abschnitte des Halteschenkels 55 stützen sich auf der Oberseite oder den Tragflächen 26 der Tragschenkel 23 ab.

Die Stützwand 54 befindet sich zwischen dem Halteschenkel 55 sowie einem Verbindungsschenkel 58. Der Verbindungsschenkel 58 verläuft beispielsweise parallel zum Halteschenkel 55, jedenfalls quer zur Stützwand 54. Der Halteschenkel 55 und der Verbindungsschenkel 58 verlaufen beispielsweise rechtwinkelig zur Flachseite an der Stützwand 54.

Der Verbindungsschenkel 58 dient zur Verbindung mit dem Tragkörper 20. An dem Verbindungsschenkel 58 sind Magnete 71 gehalten, die einerseits am Verbindungsschenkel 58 und somit am Querversteifungskörper 50 anhaften, andererseits an der Tragwand 21, insbesondere der Bodenfläche 24. Die Tragwand 21 und der Halteschenkel 55 sind beispielsweise ferromagnetisch, so dass der magnetische Halt anhand der Magnete 71 möglich ist. Die Magnete 71 sind also nicht formschlüssig am Querversteifungskörper 50 gehalten, sondern haften magnetisch an diesem an, wobei sie zudem noch an Verbindungsbereichen 53 an der Tragwand 21 anhaften, um so eine Versteifung derselben bereitzustellen.

Die Magnete 71 sind in Zwischenräumen zwischen den Temperiersträngen 41 vorgesehen, wobei im Ausführungsbeispiel in jedem Zwischenraum zwischen den Temperiersträngen 41 jeweils ein Magnet 71 vorgesehen ist. Es genügt aber beispielsweise nur ein Magnet. Es kann auch vorgesehen sein, dass in jedem zweiten oder dritten Zwischenraum zwischen den Temperiersträngen jeweils ein Verbindungsbereich in der Art des Verbindungsbereichs 53 vorgesehen ist.

Ein formschlüssiger Halt von Magneten an beispielsweise einem Querversteifungskörper - wobei dieses Konzept auch an einem Tragkörper möglich wäre - ist in den Figuren 5 und 6 dargestellt.

Ein Querversteifungskörper 50B dient zur Versteifung beispielsweise des Tragkörpers 20. Der Querversteifungskörper 50B weist eine Stützwand 54 auf, die winkelig, vorliegend rechtwinkelig, zur Bodenfläche 24 der Tragwand 21 verläuft. Von der Stützwand 54 stehen ein Halteschenkel 55 zur Verbindung mit den Seitenschenkeln 22 oder zumindest zur Abstützung an denselben, sowie ein Verbindungsschenkel 58 winkelig ab, vorliegend rechtwinkelig. Der Halteschenkel 55 weist beispielsweise Stützvorsprünge 56 zur Abstützung an den Seitenschenkel 22, insbesondere den von den Seitenschenkeln 22 abstehenden Tragschenkeln 23 ab.

Die Stützwand 54 kann mit ihrer Stirnseite an beispielsweise den Innenseiten 27 der Tragschenkel 23 anliegen, aber auch quer dazu einen Abstand aufweisen oder verschieblich sein. Insbesondere dadurch ist es möglich, dass beispielsweise eine Aussparung 60 des Querversteifungskörpers 50 relativ zu einem Temperierstrang 41 positioniert werden kann, der in die Aussparung 60 des Querversteifungskörpers 50 eingreift.

An dem Verbindungsschenkel 58 ist eine Magnethalterung 61 vorgesehen. Die Magnethalterung 61 ist eine Schiebehalterung, in der Magnete 71B quer zur Längsachse L entlang einer Schiebeachse S verschieblich aufgenommen sind und/oder einsteckbar sind.

Beispielsweise weist die Magnethalterung 61 eine Bodenwand 63 auf, die parallel zum Verbindungsschenkel 58 verläuft, sowie zu der Bodenwand 53 winkelige Hintergreifwände 62, die ausgehend von der Bodenwand 63 aufeinander zu verlaufen, so dass die Magnete 71B (einer ist nur dargestellt) zwar quer zur Längsachse L verschieblich in der Magnethalterung 61 aufgenommen sind, jedoch in Bezug auf eine zu dem Verbindungsschenkel 58 oder der Bodenfläche 24 senkrechte Achse und/oder zur Schiebeachse S und Längsachse L winkelige, insbesondere rechtwinkelige, senkrechte Achse verschiebefest aufgenommen sind. Die Magnete 71B haften an der Tragwand 21 an, so dass die Magnete 71B ebenso wie die Magnete 71 die Tragwand-Verbindungsmittel 70 bilden.

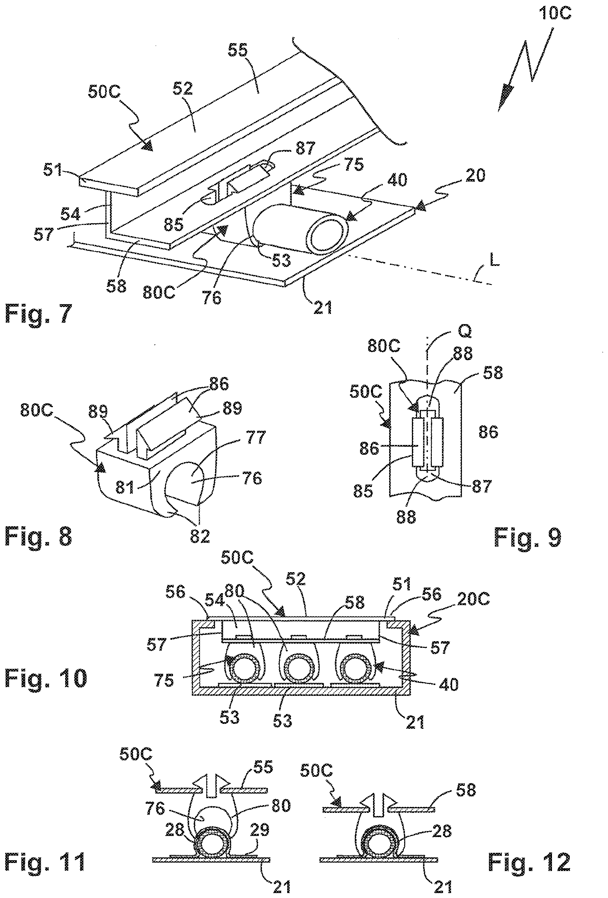

Das Verrastungskonzept gemäß Figuren 2 und 3 ist im Grunde genommen bei einem Decken-Temperierkörper 10C gemäß Figuren 7 bis 12 ebenfalls realisiert.

Ein Querversteifungskörper 50C des Decken-Temperierkörpers 10C weist eine Stützwand 54 auf, an dem ein Halteschenkel 55 T-förmig angeordnet ist. Die Stützwand 54 kann sich stirnseitig an den Seitenschenkeln 22 des Tragkörpers 20C abstützen, muss das aber nicht, was in Figur 10 angedeutet ist. Mithin ist also eine Querabstützung quer zur Längsachse L des Querversteifungskörpers 50C bezüglich des Tragkörpers 20C optional, aber nicht zwingend. Der Halteschenkel 55 steht vor die Stirnseiten der Stützwand 54 vor. Dort sind Stützvorsprünge 56 des Querversteifungskörpers 50 ausgebildet, die an den Tragschenkeln 23 des Tragkörpers 20 anliegen bzw. auf diesen abgestützt sind.

Von der Stützwand 54 steht weiterhin ein Verbindungsschenkel 58 L-förmig ab, an dem eine Reihe von Haltekörpern 80C lösbar gehalten sind, beispielsweise verrastet. Die Haltekörper 80C sind anhand von Rastverbindungen 85 an dem Querversteifungskörper 50C, insbesondere dem Verbindungsschenkel 58, gehalten.

Die Rastverbindungen 85 sind durch Rasthaken 86 gebildet, die von einer jeweiligen Haltekörper-Basis 81 des Haltekörpers 80C abstehen. Die Rasthaken 86 können mit Rastaufnahmen 87 des Querversteifungskörpers 50C verrastet werden. Die Rasthaken 86 sind aufeinander zu federnd beweglich, sodass sie durch die Rastaufnahmen 87 hindurch gesteckt werden könne, wo sie dann wieder voneinander weg federn, sodass ihre Hakenvorsprünge 89 in formschlüssigen Eingriff mit dem Querversteifungskörper 50C gelangen. Der Verbindungsschenkel 58 ist dann in einem Zwischenraum zwischen den Hakenvorsprüngen 89 und der Haltekörper-Basis 81 aufgenommen.

Die Rastaufnahmen 87 erstrecken sich entlang einer Längsachse Q und sind länger als eine Längserstreckung der Rasthaken 86, so dass diese in der Rastaufnahme 87 einen Freiraum 88 oder ein Bewegungsspiel 88 in Bezug auf die Längsachse Q aufweisen. Mithin können also die Haltekörper 80C in den Rastaufnahmen 87 quer zur Längsachse L verschoben werden, um eine optimale Position bezüglich des jeweils vom Haltekörper 80C zu haltenden Temperierstrangs 41 zu erzielen.

Dann können von der Haltekörper-Basis 81 des Haltekörpers 80C abstehende Halteschenkel 82 seitlich an den Temperiersträngen 41 vorbei (siehe Figur 11) in eine Rastverbindung mit den Temperiersträngen 41 gebracht werden, bei der die Halteschenkel 82, die man auch als Klammerschenkel bezeichnen kann, den jeweiligen Temperierstrang 41 klammerartig umgreifen.

Es ist aber nicht unbedingt notwendig, dass die Halteschenkel 82 unmittelbar einen jeweiligen Temperierstrang 41 klemmen. Es ist auch möglich, dass beispielsweise ein mit dem Temperierstrang 41 konturgleicher Körper, der jedoch mit der Tragwand 21 verbunden ist, in die jeweilige Klemmhalterung 76 eines Haltekörpers 80C eingreift.

Beispielsweise sind die Temperierstränge 41 anhand von Haltewänden 28 an der Tragwand 21 gehalten, wobei die jeweilige Haltewand 28 den jeweiligen Temperierstrang 41 formschlüssig umgreift oder umgibt. Insbesondere weist die Haltewand 28 an einem von der Bodenfläche 24 abgewandten Abschnitt des jeweiligen Temperierstrangs 41 im Wesentlichen dessen Außenkontur in geometrischer Hinsicht auf, beispielsweise eine kreisrunde Außenkontur. Seitlich von dem jeweiligen Temperierstrang 41 steht jeweils ein Befestigungsabschnitt 29 der Haltewand 28 ab. Der Befestigungsabschnitt 29 kann beispielsweise mit der Tragwand 21 verschweißt, beispielsweise punkt-verschweißt, verklebt oder dergleichen anderweitig fest verbunden sein.

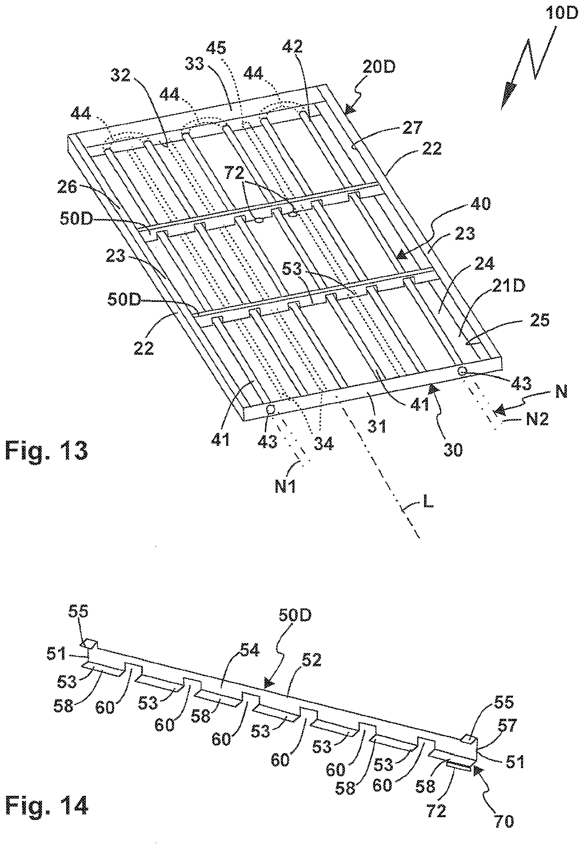

Bei den beiden vorigen Ausführungsbeispielen sind Rastverbindungen und magnetische Verbindungen erläutert worden. Aber auch eine stoffschlüssige Verbindung ist ohne weiteres möglich. Figur 13 zeigt eine Aufnahmekassette 30 eines Decken-Temperierkörpers 10D. Die Aufnahmekassette 30 weist eine vordere und eine hintere Querseitenwand 31, 32 auf, die von einer Tragwand 21D eines Tragkörpers 20D winkelig abstehen und sich zwischen dessen Seitenschenkeln 22 erstecken. Von den Querseitenwänden 31, 32 können Tragschenkel in der Art der Tragschenkel 23 abstehen. Am Beispiel der hinteren Querseitenwand 32 ist dies dargestellt, nämlich in Gestalt eines Tragschenkels 33.

An der Tragwand 21 können Versteifungsrippen 34 vorgesehen sein. Die Versteifungsrippen 34 dienen beispielsweise zur Herstellung von stoffschlüssigen Verbindungen, magnetischen Verbindungen oder dergleichen mit Querversteifungskörpern 50D, die in Bezug auf eine Längsachse L des Decken-Temperierkörpers 10D in einem Abstand zueinander angeordnet sind.

Die Temperieranordnung 40 weist beispielsweise Anschlüsse 43 auf, mit denen die Temperieranordnung 40 an Leitungen N1, N2 eines Leitungsnetzes N angeschlossen werden kann, welches ein Temperierfluid, zum Beispiel Wasser, bereitstellt. Die Anschlüsse 43 sind beim Ausführungsbeispiel an der vorderen Querseitenwand 31 vorgesehen, wobei aber auch ein Durchschleifen möglich wäre, d.h. dass beispielsweise an der vorderen Querseitenwand 31 ein Einlass und an der hinteren Querseitenwand 32 ein Auslass der Temperieranordnung 40 vorgesehen ist. Auf diesem Wege können Decken-Temperierkörper 10 sozusagen verkettet bzw. hintereinander angeordnet sein und fluidtechnisch miteinander gekoppelt werden.

Beim Ausführungsbeispiel sind jedoch die Fluidrohre 42 bzw. Temperierstränge 41 anhand von Verbindungsabschnitten 44 miteinander fluidtechnisch verbunden. Die Verbindungsabschnitte 44 erstrecken sich beispielsweise im Bereich oder hinter der Querseitenwand 32.

Beispielhaft ist noch ein elektrisches Konzept einer Temperieranordnung dargestellt. Beispielsweise können anstelle oder einer Ergänzung der Fluidrohre 42 auch elektrische Temperierleitungen 45, von denen lediglich eine beispielhaft dargestellt ist, vorgesehen sein.

Der Querversteifungskörper 50D weist eine Stützwand 54 auf, an der eine Mehrzahl von Aussparungen 60 für jeweils einen Temperierstrang 41 vorgesehen ist. Von der Stützwand 54 stehen Halteschenkel 55 winkelig ab, die beispielsweise an den Tragschenkel 23 der Seitenschenkel 22 unterseitig und/oder an ihren der Bodenfläche 24 zugewandten Seite abgestützt sind.

Weiterhin können die Stirnseiten 57 der Stützwand 54 an den Innenseiten 25 der Seitenschenkel 22 stirnseitig abgestützt sein. Dort ist beispielsweise eine stoffschlüssige Verbindung, beispielsweise eine Schweißverbindung oder dergleichen ohne weiteres möglich.

Neben einer oder mehreren der Aussparungen 60 steht ein Verbindungsschenkel 58 von der Stützwand 54 winkelig ab. Die Verbindungsschenkel 58 und die Stützwand 54 bilden beispielsweise eine L-förmige Konfiguration. Die Verbindungsschenkel 58 und die Halteschenkel 55 bilden zusammen mit der Stützwand 54 eine U-förmige Anordnung oder U-förmigen Querschnitt.

Die Aussparungen 60 weisen vorzugsweise eine derartige lichte Weite auf, dass der Querversteifungskörper 50D ein Bewegungsspiel quer zur Längsachse L bezüglich des in die Aussparung 60 eingreifenden Temperierstrangs 41 aufweist.

Es ist aber auch möglich, dass die Aussparungen 60 quer zur Längsachse L derart eng sind, dass die Aussparungen 60 den jeweils darin aufgenommenen Temperierstrang 41 quer zur Längsachse L formschlüssig, insbesondere im Klemmsitz, halten. Wenn der jeweilige Temperierstrang 41 an der Tragwand 21D fest angeordnet ist, bildet jede Aussparung 60 eine Halteaufnahme für den Temperierstrang 41 und zugleich einen Verbindungsbereich 53 des Querversteifungskörpers 50D bezüglich des Tragkörpers 20D.

An einem oder mehreren der Verbindungsschenkel 58 kann ein Verbindungsbereich 53 mit dem Tragkörper 20, insbesondere dessen Tragwand 21 ausgebildet sein. Beispielsweise ist dort jeweils eine Stoffschluss-Verbindung 72 vorgesehen, zum Beispiel eine Klebeverbindung, magnetische Verbindung oder dergleichen. In Figur 14 ist nur eine Stoffschluss-Verbindung 72 exemplarisch angedeutet.

| | | | |
|---|---|---|---|
| 10 | Decken-Temperierkörper | 60 | Aussparung |
| 11 | | 61 | Magnethalterung |
| 12 | | 62 | Hintergreifwand |
| 13 | | 63 | Bodenwand |
| 14 | | 64 | |
| 15 | | 65 | |
| 16 | | 66 | |
| 17 | | 67 | |
| 20 | Tragkörper | 68 | |
| 21 | Tragwand | 69 | |
| 22 | Seitenschenkel | 70 | Tragwand-Verbindungsmittel |
| 23 | Tragschenkel | 71 | Magnet 71B |
| 24 | Bodenfläche | 72 | Stoffschluss-Verbindung |
| 25 | Innenseite von 22 | 73 | Stoffschluss-Verbindung 50/20 |
| 26 | Oberseite/Tragfläche von 23 | 74 | |
| 27 | Innenseite von 23 | 75 | Temperierstrang-Haltemittel |
| 28 | Haltewand | 76 | Klemmhalterung |
| 29 | A Befestigungsabschnitt von 28 | 77 | Halteaufnahme Rast- Klemmaufn |
| 30 | Aufnahmekassette | 78 | |
| 31 | Querseitenwand vorn | 79 | |
| 32 | Querseitenwand hinten | 80 | Haltekörper 80C |
| 33 | Tragschenkel hintere Querseitenwand | 81 | Haltekörper-Basis |
| 34 | Versteifungsrippe | 82 | Halteschenkel Klemmschenkel |
| 35 | Profilkörper | 83 | |
| 36 | | 84 | |
| 37 | | 85 | Rastverbindung |
| 38 | | 86 | Rasthaken |
| 39 | | 87 | Rastaufnahme 50 |
| 40 | Temperieranordnung | 88 | Bewegungsspiel |
| 41 | Temperierstränge | 89 | Hakenvorsprüngen |
| 42 | Fluidrohre | 90 | |
| 43 | Anschlüsse | 91 | |
| 44 | Verbindungsabschnitte | 92 | |
| 45 | EI. Temperierleitung | 93 | |
| 46 | Zwischenräume | 94 | |
| 47 | | 95 | |
| 48 | | 96 | |
| 49 | | 97 | |
| 50 | Querversteifungskörper | 98 | |
| 51 | Längsenden | 99 | |
| 52 | Mittelabschnitt | L | Längsachse |
| 53 | Verbindungsbereich | R | Raum |
| 54 | Stützwand | S | Schiebeachse |
| 55 | Halteschenkel oben an 54 | Q | Längsachse |
| 56 | Stützvorsprung an 51 | N1 | N2 Leitung |
| 57 | Stirnseite von 54 | N | Leitungsnetz |
| 58 | Verbindungsschenkel | | |
| 59 | | | |

## Patentansprüche

1. Decken-Temperierkörper (10), insbesondere Strahlkörper und/oder Deckenstrahlplatte, mit einem langgestreckten Tragkörper (20), der sich entlang einer Längsachse (L) erstreckt und eine plattenartige Tragwand (21) aufweist, von der parallel zur Längsachse (L) verlaufende Seitenschenkel (22) winkelig, insbesondere rechtwinkelig, abstehen und die eine Temperieranordnung (40) mit mehreren Temperiersträngen (41) trägt, wobei die Temperierstränge (41) Fluidrohre (42) zur Durchströmung mit einem Temperierfluid und/oder elektrische Temperierleitungen umfassen oder dadurch gebildet sind, wobei der Tragkörper (20) durch mindestens einen Querversteifungskörper (50) versteift ist, dessen Längsenden (51) an den Seitenschenkeln (22) des Tragkörpers (20) abgestützt sind und der sich mit einem Mittelabschnitt (52) quer zur Längsachse (L) des Decken-Temperierkörpers (10) über die Tragwand (21) erstreckt, wobei der Mittelabschnitt (52) mit mindestens einem Verbindungsbereich (53) mit der Tragwand (21) verbunden ist, **dadurch gekennzeichnet, dass** der Querversteifungskörper (50) Temperierstrang-Haltemittel (75) zum Halten an mindestens einem Temperierstrang (41) aufweist, wobei die Temperierstrang-Haltemittel (75) eine Klemmhalterung (76) und/oder eine Formschlusshalterung und/oder mindestens einen Magneten (71) und/oder eine Stoffschluss-Verbindung, insbesondere eine Klebeverbindung oder Schweißverbindung, umfassen.

2. Decken-Temperierkörper (10) nach Anspruch 1, **dadurch gekennzeichnet, dass** die Temperieranordnung (40), insbesondere die Temperierstränge, fest an dem Tragkörper (20) angeordnet ist und/oder zwischen der Tragwand (21) und einer mit der Tragwand (21) fest verbundenen Haltewand (28) gehalten ist;
wobei vorzugsweise die Temperieranordnung (40) mit dem Tragkörper (20) formschlüssig und/oder stoffschlüssig verbunden ist und/oder dass die Temperierstränge (41) sandwichartig zwischen der Tragwand (21) unc einer Haltewand (28), die mit der Tragwand (21) in Zwischenräumen (46) zwischen den Temperiersträngen (41) verbunden ist, gehalten sind.

3. Decken-Temperierkörper (10) nach einem der vorhergehenden Ansprüche, **dadurch gekennzeichnet, dass** die Temperierstränge (41) ganz oder abschnittsweise parallel zu der Längsachse (L) verlaufen oder dass alle Temperierstränge (41) parallel zu der Längsachse (L) verlaufen; und/oder dass der mindestens eine Verbindungsbereich (53) in einem Zwischenraum zwischen zwei Temperiersträngen (41) vorgesehen ist.

4. Decken-Temperierkörper (10) nach einem der vorhergehenden Ansprüche, **dadurch gekennzeichnet, dass** mindestens einer der Temperierstränge (41) zwischen der Tragwand (21) und einer Haltewand (28), die mit der Tragwand (21) neben dem Temperierstrang (41) verbunden ist, insbesondere sandwichartig gehalten ist.

5. Decken-Temperierkörper (10) nach einem der vorhergehenden Ansprüche, **dadurch gekennzeichnet, dass** der Querversteifungskörper (50) in dem mindestens einen Verbindungsbereich (53) an mindestens einem Temperierstrang (41) vorbei zu der Tragwand (21) vorsteht und mit dieser oder einem an der Tragwand (21) fest angeordneten Körper durch ein Tragwand-Verbindungsmittel unmittelbar verbunden ist, wobei das Tragwand-Verbindungsmittel vorzugsweise eine Klemmkontur und/oder eine Formschlusskontur und/oder mindestens einen Magneten (71) und/oder eine Stoffschluss-Verbindung, insbesondere eine Klebeverbindung oder Schweißverbindung, umfasst.

6. Decken-Temperierkörper (10) nach einem der vorhergehenden Ansprüche, **dadurch gekennzeichnet, dass** der Querversteifungskörper (50) und/oder die Tragwand (21) eine Magnethalterung (61) zum Halten mindestens eines Magneten (71) aufweist, wobei vorzugsweise der mindestens eine Magnet in oder an der Magnethalterung (61) bezüglich mindestens eines insbesondere linearen Bewegungsfreiheitsgrads beweglich aufgenommen ist.

7. Decken-Temperierkörper (10) nach einem der vorhergehenden Ansprüche, **dadurch gekennzeichnet, dass** der Querversteifungskörper (50) mindestens eine Aussparung (60) für einen Temperierstrang (41) und/oder mindestens eine Halteaufnahme (77) zum Halten an einem Temperierstrang (41) aufweist, wobei vorzugsweise die mindestens eine Halteaufnahme (77) eine Klemmaufnahme zum Verklemmen des Temperierstrangs (41) und/oder eine Rastaufnahme zum Verrasten des Temperierstrangs (41) in der Rastaufnahme bildet.

8. Decken-Temperierkörper (10) nach einem der vorhergehenden Ansprüche, **dadurch gekennzeichnet, dass** der Querversteifungskörper (50) eine Reihenanordnung mehrerer Aussparungen (60) aufweist, in denen jeweils ein Temperierstrang (41) aufgenommen ist; und/oder dass der mindestens eine Querversteifungskörper (50) mindestens eine plattenartige Stützwand aufweist, deren Flachseite zu einer dem Querversteifungskörper (50) zugewandten Oberseite oder Flachseite der Tragwand (21) winkelig, insbesondere orthogonal, verläuft.

9. Decken-Temperierkörper (10) nach Anspruch 7, **dadurch gekennzeichnet, dass** die Halteaufnahme (77) an einem Haltekörper (80), insbesondere einer Halteklemme, vorgesehen ist, der an dem Querversteifungskörper (50) ortsfest angeordnet ist oder, insbesondere quer zu der Längsachse (L), verschieblich ist; und/oder **dadurch gekennzeichnet, dass** der Haltekörper (80) lösbar und/oder durch eine Rastverbindung an dem Querversteifungskörper (50) fixiert ist.

10. Decken-Temperierkörper nach einem der vorhergehenden Ansprüche, **dadurch gekennzeichnet, dass** an dem Tragkörper (20) mindestens zwei in Bezug auf seine Längsachse (L) in einem Abstand zueinander angeordnete Querversteifungskörper (50) angeordnet sind.

11. Decken-Temperierkörper nach einem der vorhergehenden Ansprüche, **dadurch gekennzeichnet, dass** der Tragkörper (20) an mindestens einem Längsende (51) bezüglich der Längsachse (L) eine quer zur Längsachse (L) verlaufende und von der Tragwand (21) abstehende Querseitenwand (31, 32) aufweist, wobei die Querseitenwand (31, 32) vorzugsweise mit mindestens einem Seitenschenkel (22) des Tragkörpers (20) verbunden oder einstückig ist.

12. Decken-Temperierkörper nach einem der vorhergehenden Ansprüche, **dadurch gekennzeichnet, dass** der Tragkörper (20) eine Aufnahmekassette (30) für die Temperieranordnung (40) bildet oder als Aufnahmekassette (30) ausgestaltet ist.

13. Decken-Temperierkörper nach einem der vorhergehenden Ansprüche, **dadurch gekennzeichnet, dass** der Tragkörper (20) und/oder der mindestens eine Querversteifungskörper (50) aus Metall, insbesondere Metallblech, bestehen; und/oder **dadurch gekennzeichnet, dass** der mindestens eine Querversteifungskörper (50) und/oder der Tragkörper (20) ein Profilkörper (35) ist oder einen Profilkörper (35) aufweist.

14. Decken-Temperierkörper nach einem der vorhergehenden Ansprüche, **dadurch gekennzeichnet, dass** die Tragwand (21) des Tragkörpers (20) mindestens eine, insbesondere parallel zur Längsachse (L) verlaufende, Versteifungsrippe (34) aufweist, oder dass die Tragwand (21) außer den Seitenschenkeln (22) und gegebenenfalls einer vorderen und/oder hinteren Querseitenwand (31, 32) keine Versteifungsstruktur, insbesondere keine Versteifungsrippen (34), aufweist.

## Claims

1. Ceiling temperature-control body (10), in particular radiating body and/or ceiling radiating plate, having an elongate supporting body (20) extending along a longitudinal axis (L) that comprises a plate-like supporting wall (21) from which side limbs (22) running parallel to the longitudinal axis (L) project at an angle, in particular at a right angle, and which carries a temperature-control arrangement (40) having multiple temperature-control lines (41), wherein the temperature-control lines (41) include or are formed by fluid tubes (42) for being flowed through by a temperature-control fluid and/or electric temperature-control lines, wherein the supporting body (20) is stiffened by at least one transverse stiffening body (50) whose longitudinal ends (51) are supported against the side limbs (22) of the supporting body (20) and which, with a middle portion (52), extends over the supporting wall (21) transversely to the longitudinal axis (L) of the ceiling temperature-control body (10), wherein the middle portion (52) is connected to the supporting wall (21) by way of at least one connecting region (53), **characterized in that** the transverse stiffening body (50) comprises temperature-control-line holding means (75) for holding at least one temperature-control line (41), wherein the temperature-control-line holding means (75) include a clamping mount (76) and/or a form-fit mount and/or at least one magnet (71) and/or a materially bonded connection, in particular an adhesive connection or welded connection.

2. Ceiling temperature-control body (10) according to Claim 1, **characterized in that** the temperature-control arrangement (40), in particular the temperature-control lines, are fixedly arranged on the supporting body (20) and/or held between the supporting wall (21) and a holding wall (28) which is fixedly connected to the supporting wall (21); wherein preferably the temperature-control arrangement (40) is connected in a form-fitting and/or materially bonded manner to the supporting body (20), and/or **in that** the temperature-control lines (41) are held in a sandwich-like manner between the supporting wall (21) and a holding wall (28) which is connected to the supporting wall (21) in intermediate spaces (46) between the temperature-control lines (41).

3. Ceiling temperature-control body (10) according to either of the preceding claims, **characterized in that** the temperature-control lines (41) completely or sectionally run parallel to the longitudinal axis (L), or **in that** all the temperature-control lines (41) run parallel to the longitudinal axis (L); and/or **in that** the at least one connecting region (53) is provided in an intermediate space between two temperature-control lines (41).

4. Ceiling temperature-control body (10) according to one of the preceding claims, **characterized in that** at least one of the temperature-control lines (41) is held in an in particular sandwich-like manner between the supporting wall (21) and a holding wall (28) which is connected to the supporting wall (21) next to the temperature-control line (41).

5. Ceiling temperature-control body (10) according to one of the preceding claims, **characterized in that** the transverse stiffening body (50) projects in the at least one connecting region (53) past at least one temperature-control line (41) to the supporting wall (21) and is directly connected to the latter or to a body fixedly arranged on the supporting wall (21) by a carrying-wall connecting means, wherein the carrying-wall connecting means preferably includes a clamping contour and/or a form-fitting contour and/or at least one magnet (71) and/or a materially bonded connection, in particular an adhesive connection or welded connection.

6. Ceiling temperature-control body (10) according to one of the preceding claims, **characterized in that** the transverse stiffening body (50) and/or the supporting wall (21) comprises a magnet mount (61) for holding at least one magnet (71), wherein preferably the at least one magnet is received in or on the magnet mount (61) so as to be movable in relation to at least one in particular linear degree of freedom of movement.

7. Ceiling temperature-control body (10) according to one of the preceding claims, **characterized in that** the transverse stiffening body (50) comprises at least one recess (60) for a temperature-control line (41) and/or at least one holding receptacle (77) for holding a temperature-control line (41), wherein preferably the at least one holding receptacle (77) forms a clamping receptacle for clamping of the temperature-control line (41) and/or a latching receptacle for latching of the temperature-control line (41) in the latching receptacle.

8. Ceiling temperature-control body (10) according to one of the preceding claims, **characterized in that** the transverse stiffening body (50) comprises a series arrangement of multiple recesses (60) in which respectively one temperature-control line (41) is received; and/or **in that** the at least one transverse stiffening body (50) comprises at least one plate-like supporting wall whose flat side extends at an angle, in particular orthogonally, to a flat side or an upper side, facing towards the transverse stiffening body (50), of the supporting wall (21).

9. Ceiling temperature-control body (10) according to Claim 7, **characterized in that** the holding receptacle (77) is provided on a holding body (80), in particular a holding clamp, which, on the transverse stiffening body (50), is arranged in a positionally fixed manner or is displaceable, in particular transversely to the longitudinal axis (L); and/or **characterized in that** the holding body (80) is fixed to the transverse stiffening body (50) so as to be releasable and/or by a latching connection.

10. Ceiling temperature-control body according to one of the preceding claims, **characterized in that** at least two transverse stiffening bodies (50) are arranged on the supporting body (20) and, in relation to the longitudinal axis (L) of the latter, are arranged at a distance from one another.

11. Ceiling temperature-control body according to one of the preceding claims, **characterized in that**, at at least one longitudinal end (51) in relation to the longitudinal axis (L), the supporting body (20) comprises a transverse side wall (31, 32) which runs transversely to the longitudinal axis (L) and which projects from the supporting wall (21), wherein the transverse side wall (31, 32) is preferably connected to at least one side limb (22) of the supporting body (20) or is formed in one piece therewith.

12. Ceiling temperature-control body according to one of the preceding claims, **characterized in that** the supporting body (20) forms a receiving cartridge (30) for the temperature-control arrangement (40) or is in the form of a receiving cartridge (30).

13. Ceiling temperature-control body according to one of the preceding claims, **characterized in that** the supporting body (20) and/or the at least one transverse stiffening body (50) consists of metal, in particular sheet metal; and/or **characterized in that** the at least one transverse stiffening body (50) and/or the supporting body (20) is a profile body (35) or comprises a profile body (35).

14. Ceiling temperature-control body according to one of the preceding claims, **characterized in that** the supporting wall (21) of the supporting body (20) comprises at least one stiffening rib (34) which runs in particular parallel to the longitudinal axis (L), or **in that** the supporting wall (21) comprises no stiffening structure, in particular no stiffening ribs (34), apart from the side limbs (22) and possibly a front and/or rear transverse side wall (31, 32).

## Revendications

1. Corps régulateur de température de plafond (10), en particulier corps rayonnant et/ou plaque rayonnante de plafond, comprenant un corps porteur allongé (20) qui s'étend le long d'un axe longitudinal (L) et présente une paroi porteuse (21) en forme de plaque à partir de laquelle des branches latérales (22) s'étendant en parallèle à l'axe longitudinal (L) font saillie à un angle, en particulier à angle droit, et ladite paroi portant un agencement de régulation de température (40) pourvu de plusieurs tubes de régulation de température (41), dans lequel les tubes de régulation de température (41) comprennent ou sont formés par des tuyaux de fluide (42) servant au passage d'un fluide régulateur de température et/ou par des lignes électriques de régulation de température, dans lequel le corps porteur (20) est renforcé par au moins un corps de renforcement transversal (50) dont les extrémités longitudinales (51) prennent appui sur les branches latérales (22) du corps porteur (20) et qui s'étend avec sa partie centrale (52) transversalement à l'axe longitudinal (L) du corps régulateur de température de plafond (10) en travers de la paroi porteuse (21), la partie centrale (52) étant reliée à la paroi porteuse (21) par au moins une zone de liaison (53), **caractérisé en ce que** le corps de renforcement transversal (50) présente des moyens de maintien de tube de régulation de température (75) pour le maintien sur au moins un tube de régulation de température (41), dans lequel les moyens de maintien de tube de régulation de température (75) comprennent une attache de serrage (76) et/ou une attache d'assemblage par complémentarité de forme et/ou au moins un aimant (71) et/ou un dispositif d'assemblage par liaison de matière, en particulier un assemblage collé ou un assemblage soudé.

2. Corps régulateur de température de plafond (10) selon la revendication 1, **caractérisé en ce que** l'agencement de régulation de température (40), en particulier les tubes de régulation de température, est disposé solidement sur le corps porteur (20) et/ou est maintenu entre la paroi porteuse (21) et une paroi de maintien (28) reliée solidement à la paroi porteuse (21) ;
dans lequel de préférence l'agencement de régulation de température (40) est relié au corps porteur (20) par complémentarité de forme et/ou par liaison de matière, et/ou **en ce que** les tubes de régulation de température (41) sont maintenus en sandwich entre la paroi porteuse (21) et une paroi de maintien (28) qui est reliée à la paroi porteuse (21) dans des intervalles (46) entre les tubes de régulation de température (41).

3. Corps régulateur de température de plafond (10) selon l'une quelconque des revendications précédentes, **caractérisé en ce que** les tubes de régulation de température (41) s'étendent entièrement ou localement en parallèle à l'axe longitudinal (L), ou **en ce que** tous les tubes de régulation de température (41) s'étendent en parallèle à l'axe longitudinal (L) ; et/ou **en ce que** ladite au moins une zone de liaison (53) est prévue dans un espace intermédiaire entre deux tubes de régulation de température (41).

4. Corps régulateur de température de plafond (10) selon l'une quelconque des revendications précédentes, **caractérisé en ce qu'**au moins l'un des tubes de régulation de température (41) est retenu entre la paroi porteuse (21) et une paroi de maintien (28) qui est reliée à la paroi porteuse (21) à côté du tube de régulation de température (41), en particulier maintenue en sandwich.

5. Corps régulateur de température de plafond (10) selon l'une quelconque des revendications précédentes, **caractérisé en ce que** le corps de renforcement transversal (50) fait saillie dans ladite au moins une zone de liaison (53) en passant devant au moins un tube de régulation de température (41) jusqu'à la paroi porteuse (21) et est relié à celle-ci ou à un corps disposé solidement sur la paroi porteuse (21) directement par d'un moyen de liaison de paroi porteuse, dans lequel le moyen de liaison de paroi porteuse comprend de préférence un contour de serrage et/ou un contour d'assemblage par complémentarité de forme et/ou au moins un aimant (71) et/ou un assemblage par liaison de matière, en particulier un assemblage collé ou un assemblage soudé.

6. Corps régulateur de température de plafond (10) selon l'une quelconque des revendications précédentes, **caractérisé en ce que** le corps de renforcement transversal (50) et/ou la paroi porteuse (21) présente une attache magnétique (61) pour maintenir au moins un aimant (71), dans lequel de préférence ledit au moins un aimant est reçu dans ou sur l'attache magnétique (61) de manière mobile par rapport à au moins un degré de liberté de mouvement, en particulier linéaire.

7. Corps régulateur de température de plafond (10) selon l'une quelconque des revendications précédentes, **caractérisé en ce que** le corps de renforcement transversal (50) présente au moins un évidement (60) pour un tube de régulation de température (41) et/ou au moins un logement de maintien (77) pour le maintien sur un tube de régulation de température (41), dans lequel de préférence ledit au moins un logement de maintien (77) constitue un logement de serrage pour caler le tube de régulation de température (41) ou un logement à encliquetage pour encliqueter le tube de régulation de température (41) dans le logement à encliquetage.

8. Corps régulateur de température de plafond (10) selon l'une quelconque des revendications précédentes, **caractérisé en ce que** le corps de renforcement transversal (50) présente un agencement en série de plusieurs évidements (60) dans lesquels respectivement un tube de régulation de température (41) est reçu ; et/ou **en ce que** ledit au moins un corps de renforcement transversal (50) présente au moins une paroi de support en forme de plaque dont la face plate s'étend à un angle, en particulier orthogonal, par rapport à une face supérieure ou une face plate de la paroi porteuse (21), tournée vers le corps de renforcement transversal (50).

9. Corps régulateur de température de plafond (10) selon la revendication 7, **caractérisé en ce que** le logement de maintien (77) est prévu sur un corps de maintien (80), en particulier une pince de maintien, qui est disposé de manière stationnaire sur le corps de renforcement transversal (50) ou est mobile en particulier transversalement à l'axe longitudinal (L) ; et/ou **caractérisé en ce que** le corps de maintien (80) est fixé au corps de renforcement transversal (50) de manière amovible et/ou par l'intermédiaire d'une liaison à encliquetage.

10. Corps régulateur de température de plafond selon l'une quelconque des revendications précédentes, **caractérisé en ce qu'**au moins deux corps de renforcement transversal (50) sont disposés à une distance l'un par rapport à l'autre sur le corps porteur (20) par rapport à l'axe longitudinal (L) de celui-ci.

11. Corps régulateur de température de plafond selon l'une quelconque des revendications précédentes, **caractérisé en ce que** le corps porteur (20) présente à au moins une extrémité longitudinale (51) par rapport à l'axe longitudinal (L) une paroi latérale transversale (31, 32) s'étendant transversalement par rapport à l'axe longitudinal (L) et faisant saillie à partir de la paroi porteuse (21), dans lequel la paroi latérale transversale (31, 32) est reliée de préférence à au moins une branche latérale (22) du corps porteur (20) ou est réalisée d'un seul tenant avec celui-ci.

12. Corps régulateur de température de plafond selon l'une quelconque des revendications précédentes, **caractérisé en ce que** le corps porteur (20) forme une cassette de logement (30) pour l'agencement de régulation de température (40) ou est configuré comme une cassette de logement (30).

13. Corps régulateur de température de plafond selon l'une quelconque des revendications précédentes, **caractérisé en ce que** le corps porteur (20) et/ou ledit au moins un corps de renforcement transversal (50) sont en métal, en particulier en tôle métallique ; et/ou **caractérisé en ce que** ledit au moins un corps de renforcement transversal (50) et/ou le corps porteur (20) correspond à un corps profilé (35) ou présente un corps profilé (35).

14. Corps régulateur de température de plafond selon l'une quelconque des revendications précédentes, **caractérisé en ce que** la paroi porteuse (21) du corps porteur (20) présente au moins une nervure de renforcement (34) s'étendant en particulier en parallèle à l'axe longitudinal (L), ou **en ce que** la paroi porteuse (21) ne présente aucune structure de renforcement, en particulier aucune nervure de renforcement (34), en dehors des branches latérales (22) et le cas échéant d'une paroi latérale transversale avant et/ou arrière (31, 32).
